# EUROPÄISCHE PATENTANMELDUNG

(11) **EP 0 716 366 A2**
(43) Veröffentlichungstag der Anmeldung: **12.06.1996**
(21) Anmeldenummer: 95119230.1
(22) Anmeldetag: 06.12.1995
(51) Int. Cl.: G05D 23/00, F01P 7/00

(54) **Vorrichtung zur Steuerung eines Durchflusses, insbesondere Ventil**

(30) Priorität: 06.12.1994 DE 4443352
(71) Anmelder: KERMI GmbH, D-94447 Plattling (DE)
(72) Erfinder: Fonfara, Harald, D-94551 Lalling (DE); Hofinger, Roland, D-94469 Deggendorf (DE)
(74) Vertreter: Schwabe - Sandmair - Marx

(57) **Zusammenfassung**

Die Erfindung betrifft eine Vorrichtung zur Steuerung eines Durchflusses, insbesondere ein Ventil, vorzugsweise ein Thermostatventil, mit einem Gehäuse, einem Teller bzw. Ventilkörper in dem Gehäuse, um den Durchfluß zu steuern, mit einem Zuström- und/oder Abströmabschnitt und mit einem Sitz für den Teller bzw. Ventilkörper, wobei der Teller bzw. der Sitz und/oder der Abströmkanal erfindungsgemäß einen veränderbaren Bereich aufweisen, wobei durch die Veränderung dieses Bereiches der Strömungsquerschnitt beeinflußbar ist, um den Durchfluß zu steuern.

## Beschreibung

Die Erfindung betrifft eine Vorrichtung zur Steuerung eines Durchflusses, insbesondere ein Ventil, vorzugsweise ein Thermostatventil, nach den Oberbegriffen der unabhängigen Patentansprüche.

Derlei Vorrichtungen sind im Stand der Technik hinlänglich bekannt und werden in den verschiedensten technischen Bereichen eingesetzt. So z.B. werden derartige Vorrichtungen in Heizungen, insbesondere Zentralheizungen als Ventileinrichtungen bzw. Thermostatventile, eingesetzt. Auch werden derartige bzw. vergleichbare Vorrichtungen in der Hydraulik, der Anlagentechnik, im Automobilbau bzw. der Fahrzeugtechnik allgemein, und vielen anderen Bereichen verwendet.

Bei bekannten Ventilen wird die Durchflußcharakteristik, und damit die Möglichkeit zum Steuern des Durchflusses, durch die Ausbildung des Ventiltellers bzw. des Ventilkörpers und dessen Zusammenwirken mit dementsprechend ausgebildetem Ventilsitz des jeweiligen Ventils bestimmt. Ist beispielsweise der Ventilteller relativ klein bemessen, so ist die Ventilcharakteristik eine vollkommen andere, als wenn der Ventilteller wesentlich größere Abmessungen aufweist, so daß bei dem gleichen Abstand des Ventiltellers gegenüber dem Ventilsitz bei dem letzteren Fall ein wesentlich größerer freier Strömungsquerschnitt vorhanden ist als bei dem ersteren Fall.

Bisher werden derartige Ventile z.B. im Heizungsbau mit einer Vielzahl von Ventiltellern unterschiedlicher Größe hergestellt, beispielsweise fünf verschiedene Ventile, mit denen über eine unterschiedlich große Ausbildung der Ventilteller unterschiedliche Durchflußcharakteristiken geschaffen werden, so daß die besagten, beispielsweise fünf verschiedenen Ventiltypen einen bestimmten Anwendungsbereich abdecken können.

Durch diese im Stand der Technik verwendete Verfahrensweise entstehen verschiedene Probleme. Einerseits ist es erforderlich, die besagten, beispielsweise fünf unterschiedliche Typen von Ventilen herzustellen, zu lagern und logistisch bei Industrie, Handel und Handwerk zu verwalten, so daß größeren Heizkörpern eben Ventile mit größeren Ventiltellern und kleineren Heizkörpern Ventile mit mittleren oder kleineren Ventiltellern zugeordnet werden können.

Außerdem ist es ein Problem bei Ventilen bzw. Thermostatventilen, daß die Regelung bzw. das Öffnen und/oder Schließen des Ventiltellers gegenüber dem Zuströmkanal bzw. mehreren Zuströmkanälen gegen die Kraft einer Rückholeinrichtung, beispielsweise einer starken Stahlfeder vorgenommen werden muß. Hierdurch ist es erforderlich, daß entgegen der rücktreibenden Kraft der Federeinrichtung wiederum große Kräfte aufgebracht werden, um das bekannte Thermostatventil zu schließen. Da derlei Ventile üblicherweise an Heizkörpern unabhängig von einer Energieversorgung funktionieren müssen, ist es nur mit hohem Aufwand möglich, eine derartige Vorrichtung bzw. ein derartiges Ventil über eine Batterie angetrieben elektrisch zu steuern, da die elektrische Energie einer derartigen Energiezelle in Anbetracht des hohen Energieaufwandes, der zum Öffnen bzw. Regeln oder gegebenenfalls Schließen des Ventils erforderlich ist, nur über kurze Zeit ohne einen unmittelbaren Netzanschluß möglich ist.

Ferner ist es nachteilig, daß bei derartigen Ventilen entgegen dem Druck des zu regelnden Fluids, etwa einer Heiz- oder Kühlflüssigkeit, angearbeitet werden muß.

Es ist die Aufgabe der vorliegenden Erfindung, eine Vorrichtung gemäß den Oberbegriffen der unabhängigen Patentansprüche, insbesondere des Patentanspruchs 1, vorzuschlagen, die zumindest einigen der genannten Nachteile des Standes der Technik Abhilfe verschaffen kann. Insbesondere soll eine Vorrichtung gemäß dem Oberbegriff des Patentanspruchs 1 vorgeschlagen werden, die mehrere Ventil- bzw. Durchflußcharakteristiken ermöglicht bzw. sich ohne großen Kraftaufwand regeln läßt.

Diese Aufgabe wird durch eine Vorrichtung mit den in den unabhängigen Patentansprüchen aufgeführten Merkmalen gelöst.

Die mit der vorliegenden Erfindung zu erzielenden Vorteile beruhen darauf, daß der Teller und/oder der Sitz der Vorrichtung einen in ihrer wirksamen Grundfläche veränderbaren Bereich aufweisen, wobei durch die Veränderung dieses Bereiches bzw. dieser Bereiche der Strömungsquerschnitt beeinflußbar ist, um den Durchfluß zu steuern.

Hierdurch ist es möglich, daß ein und dieselbe Ventilvorrichtung für eine Vielzahl unterschiedlicher Anwendungen infrage kommt, die früher nur durch eine entsprechende Anzahl von Ventilen abgedeckt werden konnten. Es ist nun gemäß der Erfindung möglich, lediglich einen Ventiltyp herzustellen, zu lagern und logistisch gegenüber einer großen Anzahl von unterschiedlichen Heizkörpern bzw. Heizkörpergrößen und Anwendungsfällen zu verwalten, wobei es lediglich erforderlich ist, mittels der bzw. den veränderbaren Grundflächen der Teller bzw. der Sitze eine spezifische Anpassung vorzunehmen.

Besonders vorteilhaft ist es, wenn der Teller bzw. Ventilteller mehrere, insbesondere teleskopartig gegeneinander bewegbare Abschnitte aufweist. Diese Abschnitte können ineinander verschiebbar sein. Dabei kann jeder der Abschnitte einem spezifischen Anwendungsfall bzw. einer bestimmten Ventilcharakteristik entsprechen, wie sie für eine bestimmte Anwendung bzw. einen bestimmten Heizkörpertyp optimal ist.

Soll beispielsweise eine erfindungsgemäße Vorrichtung für vier verschiedene Heizkörpergrößen und damit vier verschiedene Anwendungsfälle ausgelegt sein, so kann der Teller aus vier ineinander verschiebbaren Abschnitten, beispielsweise in der Form von ineinander verschiebbaren Zylindern, ausgebildet sein, wobei immer der Durchmesser bzw. die Grundfläche des größten in der vorgeschobenen Position befindlichen Abschnitts bzw. verschiebbaren Zylinders, die Ventilcharakteristik und den Durchfluß durch das Ventil bestimmt. Dabei kann die Anzahl der bewegbaren bzw. verschiebbaren Abschnitte im Rahmen der Abmessungen der Vorrichtung selbst beliebig sein. Es können feine Unterteilungen oder aber auch relativ grobe Unterteilungen ausgewählt werden. Die einzelnen Abschnitte können beispielsweise über Gewinde, Steuerkurven über Rasteinrichtungen oder in sonstiger Weise aus einer Grundstellung in eine aktive Stellung bewegt werden.

Eine weitere besonders vorteilhafte Ausführungsform ergibt sich, wenn der Teil des Tellers, der dem Sitz zugewandt ist, eine Membran aufweist. Dabei ist die Grundfläche der Membran veränderbar, indem beispielsweise ein Stößel, der eine Widerlagerfläche bzw. Abstützfläche oder aber auch mehrere abgestützte Widerlagerflächen aufweisen kann, in Richtung auf den Sitz vor- bzw. zurückbewegt wird. In der vordersten Stellung wird die Membran ihre kleinste aktive Grundfläche aufweisen und in der hintersten Stellung des Widerlagers, beispielsweise in Form eines Stempels bzw. Stößels, wird schließlich die gesamte Membranfläche bis zu deren Befestigungspunkt am Teller bzw. über diesen hinaus, bis zu den Grenzen der Abmessungen des Tellers als aktive Grundfläche zur Beeinflussung des Durchflusses zur Verfügung stehen.

Natürlich können die beiden vorteilhaften Ausführungen noch miteinander kombiniert werden, indem im Außenbereich eines Tellers verschiebbare Abschnitte vorgesehen sind, während im Innenbereich eine Membran vorgesehen ist, die in der oben beschriebenen Weise verstellbar ist.

Da es letztlich darauf ankommt, daß der für die Regelungscharakteristik wichtige freie Strömungsquerschnitt an bestimmte Anwendungen anpaßbar ist, kann natürlich umgekehrt anstelle des Tellers auch der Sitz des Ventils angepaßt werden, indem die Bereiche des Sitzes gegenüber dem Teller bzw. Ventilkörper einstellbar sind, die mit dem Teller gegebenenfalls in Wirkverbindung treten. So kann der Sitz vorteilhafterweise ebenfalls bestimmte verstellbare bzw. bewegbare Abschnitte, etwa in Form von ineinander verschiebbaren Zylindern, aufweisen, während der Teller beispielsweise eine abgerundete Form aufweist, die mit dem jeweils nach vorne bewegten bewegbaren Abschnitt des Sitzes in Wirkverbindung tritt. In entsprechender Weise läßt sich der Sitz auch mit einer Membran ausbilden, deren Grundfläche veränderbar ist.

Selbstverständlich lassen sich die Modifikationen des Tellers und des Sitzes auch miteinander kombinieren, wenn beispielsweise ganz besonders feine Abstimmungen erwünscht sind, wie dieses unter Umständen beispielsweise bei den Ventilen der Steuerung eines Antiblockiersystems eines Kraftfahrzeuges erforderlich sein könnte.

Eine weitere sehr vorteilhafte Ausführungsform ergibt sich, wenn im Bereich des Sitzes eine oder mehrere zuschaltbare Abströmkanäle vorgesehen sind, die zusätzlich zu einem beispielsweise zentral vorgesehenen Abströmkanal vorgesehen sind. Der zuschaltbare Abströmkanal bzw. die zuschaltbaren Abströmkanäle können beispielsweise durch die Öffnungs- bzw. Regelbewegung des Tellers bzw. des den Teller aufweisenden Ventilkörpers geöffnet werden und/oder geregelt werden. Andererseits ist es auch möglich, zusätzlich einen Einsatz vorzusehen, der durch Verdrehen oder axiales Verschieben entweder den bzw. die zuschaltbaren Abströmkanäle zumindest teilweise in eine Durchflußstellung oder aber in eine abgeschlossene Stellung bringen kann, wodurch einer oder mehrere zuschaltbare Abströmkanäle zur Veränderung bzw. Anpassung der Ventilcharakteristik an unterschiedliche Anforderungen angepaßt werden können. Diese vorteilhafte Ausgestaltung kann natürlich mit den anderen Ausgestaltungen frei kombiniert werden.

Eine besonders herauszusteilende Ausführungsform gemäß dem Oberbegriff des Patentanspruchs 1 ergibt sich, wenn der Teller bzw. Ventilkörper quer bzw. senkrecht zu der Richtung des Durchflusses des Zuströmabschnittes bewegbar ist, um den Durchfluß zu regeln bzw. zu stoppen oder zuzulassen. Hierdurch muß in besonders vorteilhafter Weise nicht gegen einen besonders hohen Widerstand angearbeitet werden, so daß sehr geringe Energien ausreichen, um eine Schaltung der Vorrichtung bzw. des Thermostatventils vorzunehmen. Da die am Ventil anstehende Flüssigkeit bzw. deren Druck wenigstens im wesentlichen vertikal zur Bewegungsrichtung des Ventilkörpers bzw. -tellers ausgerichtet ist, braucht im wesentlichen nur die Energie aufgebracht zu werden, um den sehr leichten, gegebenenfalls aus Kunststoff ausgebildeten Ventilteller bzw. Ventilkörper in eine vorgegebene Position zu bewegen.

Dies kann insbesondere für Thermostatventile für Heizsysteme bzw. Zentralheizungssysteme dadurch realisiert werden, daß zwar der Ventilkörper nach wie vor axial zu dem Gehäuse der Vorrichtung bzw. des Ventils bewegbar ausgebildet ist, jedoch der bzw. die Zuströmkanäle derart geleitet werden, daß sie senkrecht zur Bewegungsrichtung des Ventilkörpers auf eine seitliche Oberfläche des Ventilkörpers treffen. Dabei kann der bzw. können die Zuströmkanäle sowohl von außen als auch von innen gegen die zugeordneten Oberflächen des Ventilkörpers gerichtet sein, wobei es im wesentlichen ausschlaggebend ist, daß die Anströmrichtung wenigstens eine überwiegende Komponente quer zur Bewegungsrichtung des Ventilkörpers aufweist.

Sofern der Ventilkörper radial von außen angeströmt wird, wird der Ventilkörper vorzugsweise über einen Einsatz bewegbar geführt, wobei der Einsatz, beispielsweise in Form einer einseitig offenen Büchse, den Ventilkörper nicht nur führt, sondern auch seitlich abstützt. Sofern der Ventilkörper beispielsweise einen einzelnen Zuströmkanal umgreift und seitliche Öffnungen aufweist, die teilweise oder insgesamt über entsprechende Öffnungen am Zuströmkanal angebracht werden können, wird ein entsprechender Einsatz nicht benötigt, da die Außenwände des Zuströmkanales selber eine Führungsfunktion übernehmen können. Auch hierbei trifft die in ihrem Durchfluß zu regelnde Flüssigkeit quer zur Bewegungsrichtung des Ventilkörpers auf die Dichtflächen des Ventilkörpers, so daß nur eine relativ geringe Energie zur Bewegung des Ventilkörpers erforderlich ist, und der Ventilkörper nicht gegen den Druck der in ihrem Durchfluß zu regelnden Flüssigkeit oder die Kraft einer Rückholfeder oder dergleichen anarbeiten muß.

Weist eine der vorgenannten Ausführungsformen seitliche Abströmkanäle auf, die radial durch das Ventilgehäuse hindurchgehen, so kann es sich als vorteilhaft erweisen, wenn ein Reguliereinsatz in das Gehäuse einsetzbar ist, der sich bis in den Wirkbereich des Ventilkörpers bzw. -tellers erstreckt, um die Durchflußcharakteristiken voreinzustellen. Hierbei kann der in den Wirkbereich zwischen dem Ventilkörper und dem Ventilsitz reichende Reguliereinsatz den freien Strömungsquerschnitt zumindest bereichsweise festlegen, so daß durch unterschiedliche, beispielsweise zylindrische, Reguliereinsätze verschiedene Durchflußquerschnitte und damit verschiedene Ventilcharakteristiken voreinstellbar bewerkstelligt werden können. Dabei kann der jeweilige Reguliereinschub einen entsprechenden Innendurchmesser und entsprechend ausgebildete Strömungsleitflächen aufweisen, die bei einer vorgegebenen Stellung des Ventilkörpers einen bestimmten Durchfluß des Fluids bzw. Heizmediums, das durch die erfindungsgemäße Vorrichtung strömt, ermöglicht. Dabei sollte auch eine Verschlußstellung ermöglicht werden können, wobei der Reguliereinsatz den Durchfluß zwischen dem Ventilkörper und dem Reguliereinsatz vollends unterbindet.

Vorteilhaft ist es, wenn das Gehäuse der erfindungsgemäßen Vorrichtung seitliche bzw. radiale Abströmkanäle aufweist und der Reguliereinsatz vorzugsweise ebenfalls entsprechende Öffnungen aufweist, die in einem bestimmten Maße oder auch vollends mit den Abströmkanälen zur Überlappung gebracht werden können, um eine bestimmte Abströmcharakteristik einzustellen und damit die Ventilcharakteristik und gegebenenfalls den maximalen Durchfluß des Ventils zusätzlich voreinstellbar auszugestalten. Die teilweise oder vollständige Überlappung der genannten Abströmkanäle bzw. Öffnungen läßt sich beispielsweise durch die Drehung des Reguliereinsatzes oder durch die Veränderung des axialen Einschubes in das Gehäuse variieren.

Vorteilhafterweise ist in dem Wirkbereich zwischen dem Teller bzw. Ventilkörper und dem Sitz eine Führungseinrichtung vorgesehen, auf bzw. in der der Ventilkörper axial verschiebbar gehalten ist. So kann der Ventilkörper beispielsweise innerhalb einer Büchse verschiebbar gehalten bzw. gefährt werden, oder aber beispielsweise auf einem axial einlaufenden Zuströmkanal gefährt werden, wobei der Ventilkörper den Zuströmkanal umfaßt und durch Hin- bzw. Herschieben mehr oder minder durchlässig gemacht werden kann, wodurch sich ebenfalls sehr vorteilhafte Ventilcharakteristiken einstellen lassen.

Vorteilhafterweise weist der Ventilkörper Druckausgleichskanäle auf, um etwa durch die Bewegungen des Ventilkörpers auftretende Drücke ausgleichen zu können, ohne daß eine zusätzliche erhebliche Bewegungsenergie aufgebracht werden muß.

Ferner ist es vorteilhafterweise möglich, gemäß der Erfindung ausgebildete Vorrichtungen mit einer Energiezelle, beispielsweise in Form eines Einweg- bzw. aufladbaren Akus zu versehen, da die geringe Energie, die für die Bewegung des Ventilkörpers erforderlich ist, über sehr lange Zeit, beispielsweise 5 bis 10 Jahre, von einer sehr kleinen Energiezelle aufgebracht werden kann, da die erforderlichen Kräfte zum Bewegen des Ventilkörpers bereits durch relativ kleine Spulen, Selenoide oder dergleichen, aufgebracht werden können. Auch eine Solarzelle kann vorgesehen werden, um die Energiezelle wieder aufzuladen oder die Antriebsenergie zur Regelung bzw. Bewegung des Ventilkörpers unmittelbar aufzubringen.

Es ist klar, daß die genannte Ausgestaltung mit dem axial verschiebbaren Teller bzw. Ventilkörper zur Beibehaltung der üblichen äußeren Formen von Ventilen gedacht ist, während es jedoch beispielsweise auch problemlos möglich ist, ein vollkommen anders ausgebildetes Ventil zu verwenden, bei dem beispielsweise ein als Scheibe ausgebildeter Querschieber gegenüber einem oder mehreren Zuströmkanälen abgestützt ist, und durch radiales oder axiales Verstellen zur teilweisen oder vollständigen Freigabe des bzw. der Zuströmkanäle gebracht werden kann. Wesentlich ist dabei auch hier nur, daß die durch den Flüssigkeitsdruck auftretenden Kräfte nicht von dem Ventilkörper bzw. Ventilteller aufgenommen werden müssen und auch keine Rückstellkräfte von irgendwelchen Federn oder aufgrund von thermischer Ausdehnung arbeitender Materialien aufzunehmen sind, die das eigentliche Thermostatverhalten bekannter Thermostate bewerkstelligen.

Vorteilhaft ist es, wenn eine Auswahl oder auch sämtliche inneren Bestandteile der erfindungsgemäßen Vorrichtung und sämtlicher aufgeführten Ausführungsformen aus Kunststoff bspw. mittels einer Spritztechnik, hergestellt werden. Auch kann Kunststoff für die äußere Verkleidung oder für die Vorrichtung insgesamt herangezogen werden.

Nachfolgend wird die Erfindung anhand weiterer Ausführungsbeispiele unter Bezugnahme auf die anliegenden Figuren näher erläutert, wobei weitere Merkmale und Vorteile gemäß der vorliegenden Erfindung offenbart werden. Es zeigen:
- Fig. 1: eine erste Ausführungsform gemäß der vorliegenden Erfindung in einem axialen Längsschnitt;
- Fig. 2: eine zweite Ausführungsform gemäß der vorliegenden Erfindung in einem axialen Längsschnitt;
- Fig. 3: eine modifizierte Ausführungsform gemäß der vorliegenden Erfindung ebenfalls in einem axialen Längsschnitt;
- Fig. 4: eine weitere Ausführungsform als Modifikation einer Vorrichtung gemäß der vorliegenden Erfindung,
- Fig. 5: ein Diagramm, aus dem die Regelcharakteristiken einer Vorrichtung mit unterschiedlichen Ventiltellergrundflächengrößen hervorgeht; und
- Fig. 6: ein Diagramm, aus dem der Einfluß der Verstellung des maximalen Durchflusses durch eine bekannte Vorrichtung hervorgeht.

In den Figuren bzw. der Figurenbeschreibung sind gleiche oder zumindest funktionsgleiche Merkmale mit den gleichen Bezugszeichen benannt.

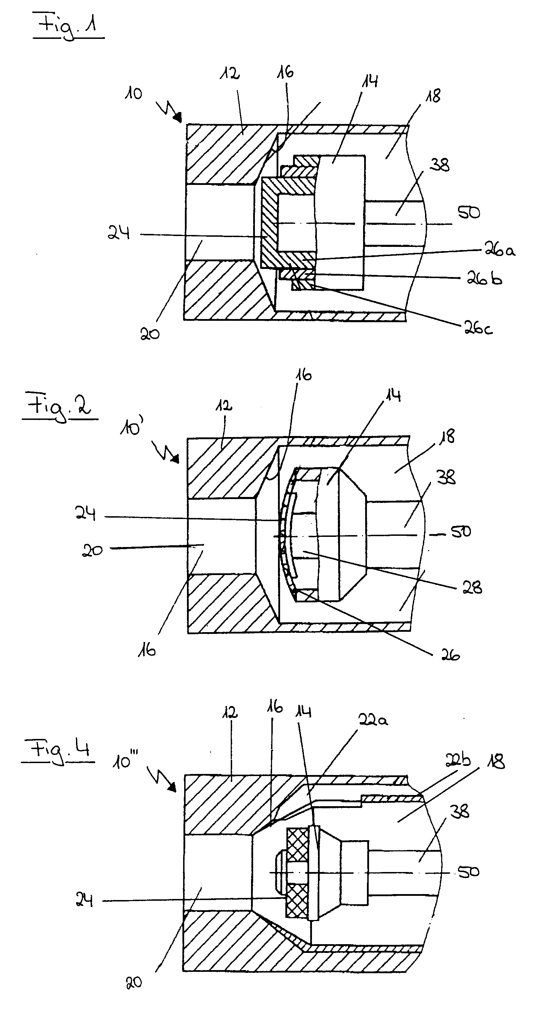

Aus Fig. 1 geht eine Ausführungsform einer erfindungsgemäßen Vorrichtung hervor, die allgemein mit dem Bezugszeichen 10 gekennzeichnet ist. Die Vorrichtung 10, die nachfolgend generell als "Ventil" bezeichnet wird, weist ein Gehäuse 12, einen Ventilteller bzw. Ventilkörper 14 und einen Ventilsitz 16 auf. Darüber hinaus sind zumindest eine Anströmbohrung 20 und zumindest eine Abströmbohrung 18 vorgesehen.

Sofern das Ventil aus Kunststoff oder Metall oder einer Kombination dieser Werkstoffe hergestellte Ventilteller bzw. -körper 14 aufweist, weist dieser Teller 14 eine Grundfläche 24 auf, die sich durch Verschiebung einzelner, beispielsweise zylindrischer Abschnitte 26a, 26b, 26c einstellen läßt. Die einzelnen Abschnitte bzw. ineinander verschiebbaren Zylinder können beispielsweise mittels Gewinde, mittels Rasteinrichtungen, die in Steuerkurven geführt werden, oder ganz einfach ohne jede Oberflächenstruktur ineinander verschiebbar ausgebildet sein, wobei im letzteren Falle beispielsweise ein Stift seitlich zur Fixierung eingesetzt werden kann oder aber durch eine seitliche Öffnung Klebstoff eingespritzt werden kann, um die verschiebbaren Abschnitte 26a, 26b, 26c in einer vorbestimmten Stellung zueinander zu fixieren. In einer bestimmten Stellung der ineinander verschiebbaren Abschnitte 26a, 26b, 26c lassen sich bestimmte Ventilcharakteristiken erhalten, da der Spalt, der zwischen dem Ventilsitz 16 und der effektiven Grundfläche 24 eingestellt wird, die Ventilcharakteristik und damit die Durchflußmenge des zu regulierenden Fluids bei einer vorgegebenen Stellung des Ventilkörpers 14 bestimmt. Da die Genauigkeit der Einstellung des Ventilkörpers 14 über etwa eine Ventilspindel 38 nur innerhalb vorgegebener Grenzen möglich ist, muß die Durchflußmenge in überwiegendem Maße durch die Geometrie des Ventilbereichs zwischen dem Zuströmkanal bzw. den Zuströmkanälen und dem Abströmkanal bzw. den Abströmkanälen bestimmt werden.

Obwohl das Ventil 10 gemäß Fig. 1 axial zu einer Zylinderachse 50 ausgerichtet ist, kann dieses Ventil natürlich auch in einer von der Zylindersymmetrie abweichenden Form ausgebildet werden.

Die Ventilspindel 38 zur Bewegung des Ventiltellers kann beispielsweise von Hand, jedoch auch über einen Motor oder die thermische Ausdehnung eines sich unter Wärmeeinwirkung ausdehnenden bzw. unter Kälteeinwirkung zusammenziehenden Materials vorgenommen werden.

Bei dem Ventil 10' gemäß Fig. 2 ist in Abweichung zu dem Ventil 10 gemäß Fig. 1 der Ventilkörper bzw. Ventilteller 14 mit seiner effektiven Grundfläche 24, die die Ventilcharakteristik zu einem ganz erheblichen Teil bestimmt, durch eine Membran 26 ausgebildet. Die Membran 26 sitzt auf dem Ventilkörper 14 und kann über einen Stempel bzw. Stößel 28 verformt werden, um auf diese Weise die effektive Grundfläche 24 zu verändern. Der Stempel bzw. Stößel 28 kann beispielsweise von außen über die Ventilspindel 38 eingestellt werden. Auch eine Einstellung von innen im demontierten Zustand ist denkbar.

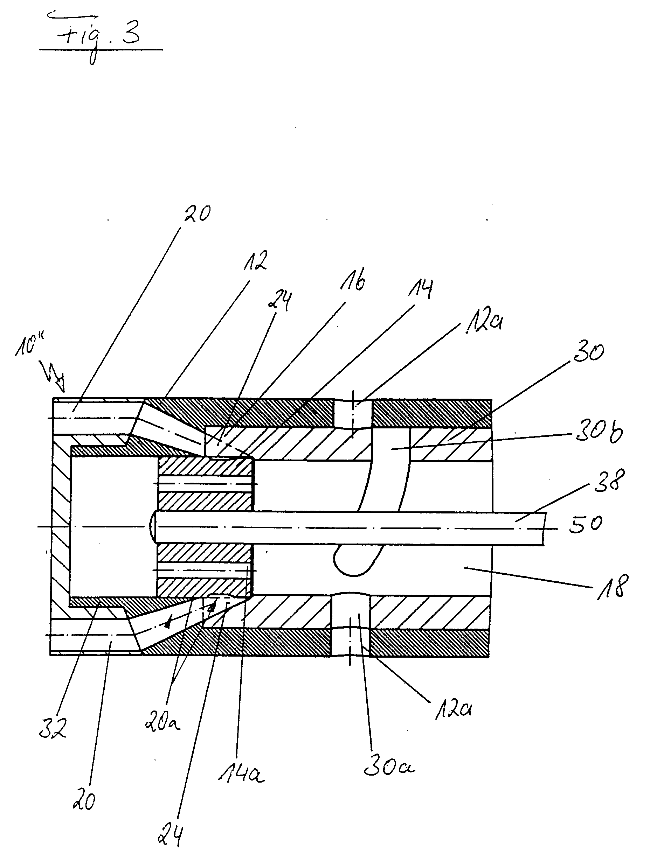

Die besonders hervorzuhebende Ausführungsform gemäß Fig. 3 zeigt ein Ventil 10'', das besonders vorteilhaft als Thermostatventil eingesetzt werden kann. Das Ventil 10'' weist ebenfalls ein Ventilgehäuse 12, einen Ventilkörper 14 und einen Ventilsitz 16 auf. Ein oder mehrere Zu- bzw. Abströmkanäle 18, 20 sind vorgesehen, wobei auch Abströmkanäle 12a im Gehäuse 12 alternativ oder zusätzlich zu dem Abströmkanal 18 vorgesehen werden können.

Der Ventilkörper 14 wird über eine Ventilspindel 38 bewegt und kann in einer Führung in Form einer Büchse 32 sehr exakt geführt werden.

Die effektive Grund- bzw. Dichtfläche des Ventilkörpers 14 wird durch seine radialen Umfangsflächen 24 bestimmt. Wird der Ventilkörper 14 über die Spindel bzw. Stange 38 vorgeschoben, so wird er in die Büchse 32 eingeführt und gibt dabei zumindest teilweise die Mündung des bzw. der Zuströmkanäle 20 frei. Eine etwa in der Büchse 32 enthaltene Flüssigkeit kann über Druckausgleichsbohrungen 14a in dem Ventilkörper 14 entweichen. Die hierfür erforderlichen zusätzlichen Kräfte sind sehr gering und fallen bei der Dimensionierung des Antriebs für die Bewegung des Ventilkörpers 14 nicht oder kaum ins Gewicht.

Wesentlich ist hier, daß die von dem Medium bzw. Fluid, dessen Durchfluß durch das Ventil 10'' gesteuert werden soll, aufgebrachten Druckkräfte auf die Antriebsspindel bzw. Antriebsstange 38 und damit den auf diesen einwirkenden Antrieb keinen Einfluß ausüben können, damit die aufzubringende Kraft und folglich die für diese Kräfte erforderliche Energie möglichst gering ist. Auf diese Weise ist es möglich, das erfindungsgemäß ausgestaltete Ventil 10'' über eine Batterie anzutreiben, die für den Betrieb des Ventils etwa ein Jahrzehnt ausreichen kann.

Zur weiteren Beeinflussung der Ventilcharakteristik des Ventils 10'' kann noch ein Reguliereinsatz 30 vorgesehen werden, der im Bereich des Ventilkörpers 14 und des Ventilsitzes 16 endet und damit über seine Dimensionierung einen Einfluß auf die Ventilcharakteristik nehmen kann. Ist der Innendurchmesser des Reguliereinsatzes 30 klein, so ist auch die Menge an Fluid klein, die durch den Spalt zwischen dem Ventilkörper 14 und dem Reguliereinsatz 30 hindurchfließt, während der Durchsatz des Ventils vergrößert ist, wenn der Innendurchmesser des Reguliereinsatzes 30 groß ist.

Der Reguliereinsatz 30 kann in seinem freien Strömungsquerschnitt in Schließrichtung des Ventilkörpers 14 verringert sein, während sein Außendurchmesser unverändert bleibt.

Zudem ist es möglich, den Reguliereinsatz 30 mit ganz bestimmt ausgebildeten Öffnungen 30a, 30b auszubilden, die eine zusätzliche Einsteilmöglichkeit ergeben, um beispielsweise den maximalen Durchfluß durch das Ventil 10'' einzustellen. Diese Voreinstellung bzw. Einstellung kann beispielsweise durch umfängliches Verdrehen des Reguliereinsatzes 30 innerhalb des Gehäuses 12 vorgenommen werden, falls die Stellung des vorderen Endes des Reguliereinsatzes 30 durch die Bewegung des Reguliereinsatzes nicht beeinflußt werden soll. Sofern es auf die Stellung des vorderen Endes des Reguliereinsatzes 30 in bezug auf den Ventilkörper 14 und den Ventilsitz 16 nicht ankommt, kann die Stellung der Öffnungen 12a zu den Öffnungen 30a, 30b auch durch axiales Verschieben eingestellt werden. So können die Öffnungen 30a, 30b beispielsweise als Wendelnut ausgebildet sein.

Die in Fig. 4 dargestellte Ausführungsform gemäß der vorliegenden Erfindung weist abweichend von den zuvor erörterten Ausführungsformen keinen bezüglich seiner effektiven Grundfläche 24 einstellbaren Ventilteller auf, sondern einen Ventilkörper 14 mit einer fix vorgegebenen effektiven Grundfläche 24. Jedoch sind im Bereich des Abströmkanales 18 einer oder mehrere zuschaltbare Abströmkanäle 22a vorgesehen, die beispielsweise über eine verdrehbare Hülse 22b an den Abströmkanal 18 mit angeschlossen werden können und über das Öffnen bzw. Schließen des Ventilkörpers 14 mit in die Ventilcharakteristik einbezogen werden können. Dabei kann durch unterschiedliches Verdrehen der Hülse einer oder mehrere Kanäle so mit einbezogen werden, daß sich unterschiedliche zusätzliche Strömungsquerschnitte ergeben, wodurch sich die Ventilcharakteristik bzw. Regelcharakteristik des Ventils verstellen läßt.

Die vorgenannten Ausführungsbeispiele lassen sich allesamt miteinander kombinieren. Die für den Teller bzw. Ventilkörper 14 erläuterten Ausführungen lassen sich prinzipiell auch auf den Sitz bzw. Ventilsitz 16 anwenden oder in Kombination miteinander auf beide Teile, den Ventilsitz 16 und den Teller bzw. die effektive Grundfläche 24 des Ventilkörpers 14, übertragen.

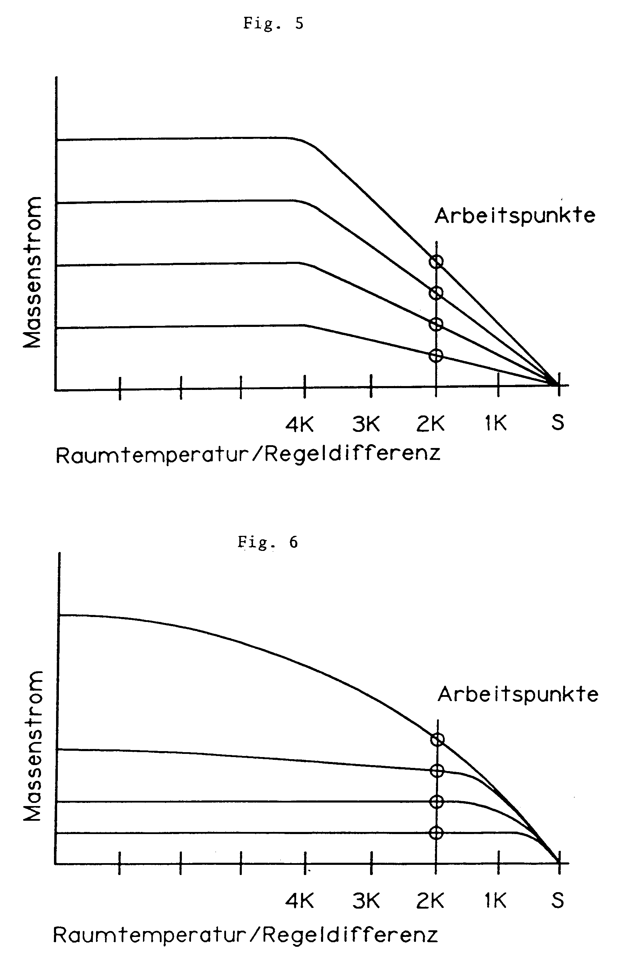

Die Fig. 5 zeigt ein Diagramm, aus dem die Regelcharakteristiken einer Vorrichtung mit unterschiedlichen Ventiltellergrundflächengrößen hervorgeht. Es ist erkennbar, daß der Massenstrom durch das Ventil bei sämtlichen Durchmessern der Grundfläche eines Ventilkörpers zunächst langsam bzw. mit zunehmendem Ventiltellerdurchmesser bzw. Ventiltellergrundflächengröße schneller zunimmt, wobei die Regelstrecke, die der Ventilkörper entlang der Zylinderachse 50 des Ventils zurücklegen kann, im wesentlichen gleich bleibt. Dementsprechend läßt sich der Massenstrom bei einem geringen Ventiltellerdurchmesser feiner regeln, wodurch sich auch die Raumtemperatur feiner einstellen läßt.

Übertragen auf die Ausführungsform gemäß Fig. 1 bedeutet dies, daß beispielsweise die mit dem geringsten Winkel ansteigende Kurve mit dem Ventilkörper 26a bewerkstelligt werden kann, während die Kurven mit den nächsthöheren Steigungen durch die Ventilkörper 26b bzw, 26c oder einen nächstgrößeren, nicht dargestellten Ventilteller repräsentiert werden könnten.

Die Fig. 6 zeigt Ventilcharakteristiken heute bekannter Ventile bei deren unterschiedlichen Voreinstellungen des maximalen Durchflusses.

Dabei ist zu beachten, daß der Nennmassenstrom eines Thermostatventils bei einer Regeldifferenz von beispielsweise 2 K erreichbar sein sollte. Eine gewisse Reserve nach oben stellt sicher, daß ein kurzfristig erhöhter Energiebedarf, der beispielsweise durch Lüften eines Raumes entstehen kann, ausreichend schnell gedeckt werden kann.

Thermostatventile, deren Voreinstellung auf der Begrenzung des maximalen Durchflusses basiert, haben den Nachteil, daß bei großen Verstellbereichen die kleinen Voreinstellungen ihren Nennmassenstrom bereits weit vor der Auslegungsregeldifferenz erreichen. Oft besitzt dann der Regler kein Proportionalverhalten, sondern nur ein 2-Punkt-Verhalten. Dies führt zu Schwingungen der Raumtemperatur. In der Praxis wird zur Vermeidung der genannten Nachteile eine Vielzahl von verschiedenen Ventilen gefertigt, die unterschiedliche Regelcharakteristiken zur Verfügung stellen.

Beeinflußt man dagegen durch die Voreinstellung nicht nur den maximalen Durchfluß des Ventiles 10, 10', 10'', 10''', sondern erfindungsgemäß auch dessen freie Fläche im Öffnungsquerschnitt, so kann im eigentlichen Arbeitsbereich die Steigung der Öffnungskennlinie mit der Begrenzung des Durchflusses so aufeinander abgestimmt werden, daß ein optimales Regelverhalten für alle Voreinstellungen sichergestellt werden kann, ohne daß mehrere unterschiedliche Ventile gefertigt werden müßten (Fig. 5). Die Abdeckung großer Voreinstellbereiche wird dadurch mit einem einzigen Ventil möglich.

## Patentansprüche

1. Vorrichtung zur Steuerung eines Durchflusses, insbesondere Ventil, vorzugsweise Thermostatventil, mit einem Gehäuse (12), mit einem Teller (14) in dem Gehäuse (12), um den Durchfluß zu steuern, mit einem Zuström- und/oder Abströmabschnitt (18, 20) und mit einem Sitz (16) für den Teller bzw. Ventilkörper (14), **dadurch gekennzeichnet, daß** der Teller bzw. Ventilkörper (14) und/oder der Sitz (16) bzw. der Abströmkanal (18, 22a) einen veränderbaren Bereich aufweist, wobei durch die Veränderung dieses Bereiches (24, 22a, 16) der Strömungsquerschnitt beeinflußbar ist.

2. Vorrichtung nach Anspruch 1, **dadurch gekennzeichnet, daß** der Teller bzw. Ventilkörper (16) einen oder mehrere gegenüber dem Sitz bewegbare Abschnitte (26a, 26b, 26c) aufweist, etwa in der Form ineinander verschiebbarer Körper, und/oder daß der Sitz (16) einen oder mehrere gegenüber dem Teller bzw. Ventilkörper (14) bewegbare Abschnitte aufweist.

3. Vorrichtung nach Anspruch 1, **dadurch gekennzeichnet, daß** der Teller bzw. Ventilkörper (14) einen Membranabschnitt (26) aufweist, dessen Grundfläche (24) veränderbar ist, insbesondere durch die Verstellung eines Stempels bzw. Stößels oder dergleichen (28), der in Richtung auf den Sitz (16) verstellbar ist, und/oder daß der Sitz (16) einen oder mehrere gegenüber dem Teller bzw. Ventilkörper (14) bewegbare Abschnitte aufweist.

4. Vorrichtung nach einem der Ansprüche 1 bis 3, **dadurch gekennzeichnet, daß** der Sitz (16) einen Membranabschnitt aufweist, dessen Grundfläche bzw. -form veränderbar ist und/oder daß die Grundfläche(n) über eine in einer Abstützeinrichtung bzw. Ventilspindel (38) vorgesehene Verstelleinrichtung (28) einstellbar ist (sind).

5. Vorrichtung nach einem der Ansprüche 1 bis 4, **dadurch gekennzeichnet, daß** im Bereich des Sitzes (16) mindestens ein zusätzlicher Abströmkanal (22a) endet, der bzw. die wahlweise zumindest teilweise zu- bzw. wegschaltbar sind, wobei insbesondere der bzw. die zusätzlichen Abströmkanäle (22a) über einen bewegbaren Körper, beispielsweise eine verdrehbare Hülse (22b), zumindest teilweise zu- bzw. wegschaltbar sind.

6. Vorrichtung nach dem Oberbegriff des Anspruchs 1, **dadurch gekennzeichnet, daß** der Teller bzw. Ventilkörper (14) im wesentlichen quer bzw. im wesentlichen senkrecht zu der Richtung des Durchflusses durch den Zuströmabschnitt (20) im Bereich vor dem Teller bzw. Ventilkörper bewegbar ist, wobei der Zuströmabschnitt (20) bevorzugt einen radial bzw. senkrecht zu der Zylinderachse der Vorrichtung ausgebildeten Abschnitt (20a) aufweist.

7. Vorrichtung nach einem der Ansprüche 1 bis 6, **dadurch gekennzeichnet, daß** in den Abströmabschnitt (18) ein Reguliereinsatz (30) bewegbar einsetzbar ist, der sich vorzugsweise bis in den Wirkbereich des Tellers bzw. Ventilkörpers (14) erstreckt, um die Durchflußcharakteristiken voreinzustellen, wobei vorzugsweise das Gehäuse (12) und der Reguliereinsatz (30) Abströmkanäle (12a, 30a, 30b) aufweisen, wobei die Abströmkanäle (30a, 30b) des Reguliereinsatzes (30), insbesondere einer Hülse (30), durch axiale und/oder umfängliche Verstellung in den Erstreckungsrichtungen der Vorrichtung bzw. deren Gehäuses zur zumindest teilweisen Überdeckung bringbar sind, um vorzugsweise den maximalen Durchfluß voreinstellbar auszubilden und insbesondere der Teller bzw. der Ventilkörper (14) axial verschiebbar in einer Führungseinrichtung (32) gehalten ist.

8. Vorrichtung nach Anspruch 7, **dadurch gekennzeichnet, daß** die Führungseinrichtung eine Büchse (32) aufweist, wobei die Büchse, der Teller bzw. Ventilkörper (14) und der Ventilsitz (16) den bzw. die Zuströmkanäle (20) in Durchflußrichtung in geschlossenem Zustand der Vorrichtung abschließen.

9. Vorrichtung nach einem der Ansprüche 6 bis 8, **dadurch gekennzeichnet, daß** der Teller bzw. Ventilkörper (14) vorzugsweise in Axialrichtung bzw. Strömungsrichtung ausgerichtete Druckausgleichskanäle (14a) aufweist.

10. Vorrichtung nach einem der Ansprüche 1 bis 9, **dadurch gekennzeichnet, daß** die Vorrichtung eine Energiezelle bzw. einen Energieanschluß aufweist, die bzw. der Energie einer Antriebseinrichtung, etwa einem Selenoid, zur Betätigung des Tellers bzw. Ventilkörpers (14) zuführt, wobei insbesondere eine Solarzelle oder dergleichen zur Bereitstellung der Betätigungsenergie vorgesehen ist, die die Energiezelle speist bzw. auflädt und/oder die Antriebseinrichtung unmittelbar speist.

11. Vorrichtung zur Steuerung eines Durchflusses, insbesondere Ventil, vorzugsweise Thermostatventil, mit einem Gehäuse (12), mit einem Teller (14) bzw. einem Sitz (16) für den Teller in dem Gehäuse (12), **dadurch gekennzeichnet, daß** der Teller bzw. Ventilkörper (14) und/oder der Sitz (16) bzw. der Abströmkanal (18, 22a) einen veränderbaren Bericht aufweist bzw. der Teller bzw. Ventilkörper (14) im wesentlichen quer bzw. im wesentlichen senkrecht zu der Richtung des Durchflusses durch den Zuströmabschnitt (20) im Bereich vor dem Teller bzw. Ventilkörper bewegbar ist.
